# EUROPÄISCHE PATENTSCHRIFT

(11) **EP 3 550 533 B1**
(45) Veröffentlichungstag und Bekanntmachung des Hinweises auf die Patenterteilung: **18.10.2023**
(21) Anmeldenummer: 18165448.4
(22) Anmeldetag: 03.04.2018
(51) Int. Cl.: G07F 17/00, G07F 11/16, G07F 11/42, B65G 1/04

(54) **KOMMISSIONIERVORRICHTUNG ZUM LAGERN VON ARZNEIMITTELFLASCHEN SOWIE VERFAHREN ZUM AUSLAGERN**
PICKING DEVICE FOR STORAGE OF MEDICINE VIALS AND METHOD FOR RELEASING
DISPOSITIF DE PRÉPARATION DES COMMANDES DESTINÉ AU STOCKAGE DES FLACONS CONTENANT DES MEDICAMENTS AINSI QUE PROCÉDÉ DE RÉCUPÉRATION

(43) Veröffentlichungstag der Anmeldung: 09.10.2019
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- EP-A1- 2 581 328
- DE-A1-102009 042 572
- US-A1- 2006 182 609
- US-A1- 2008 302 815
- US-A1- 2014 154 044

## Beschreibung

Die vorliegende Erfindung betrifft eine Kommissioniervorrichtung zum Lagern von liegenden Flaschen sowie ein Verfahren zum Auslagern von liegenden Flaschen aus dieser Kommissioniervorrichtung. Insbesondere betrifft die vorliegende Erfindung eine Kommissioniervorrichtung zum Lagern von Arzneimittelflaschen sowie ein Verfahren zum Auslagern solcher Arzneimittelflaschen.

Bei aus dem Stand der Technik bekannten Kommissioniervorrichtungen wird eine große Anzahl verschiedener und unterschiedlich dimensionierter Arzneimittelpackungen chaotisch und platzoptimiert auf langgestreckten Regalböden gelagert. Die gelagerten Arzneimittelpackungen werden mit Hilfe eines Bediengerätes ausgelagert, wozu die auf einem Regalboden angeordneten Arzneimittelpackungen mit einem Greifmittel eines Greifers des Bediengerätes auf eine Ablage des Greifers bewegt werden. Bei bekannten Kommissioniervorrichtungen ist das Greifmittel des Greifers üblicherweise als ein Paar Klemmbacken ausgebildet, mit welchem die Arzneimittelpackungen auf die Auflage gezogen werden.

Anhand der Abmessung der einzulagernden Arzneimittelpackungen sowie der Belegung der Kommissioniervorrichtung wird ein optimaler Lagerplatz für eine einzulagernde Arzneimittelpackung berechnet, in einer Steuereinrichtung abgespeichert und die Arzneimittelpackung anschließend an einem dem Lagerplatz entsprechenden Ablageort auf einen Regalboden bewegt. Zur Berechnung eines optimalen Lagerplatzes ist es erforderlich, dass die Steuereinrichtung der Kommissioniervorrichtung den genauen geometrischen Aufbau der Kommissioniervorrichtung und insbesondere die Lage bzw. Anordnung und die Dimensionierung der Regalböden kennt, da nur so verhindert werden kann, dass als Lagerplatz eine Position innerhalb der Kommissioniervorrichtung gewählt wird, die beispielsweise von einer die Regalböden tragenden Regalwand "belegt" ist.

Bei der zuvor beschriebenen Kommissioniervorrichtung werden Arzneimittelpackungen also nicht bei bereits vor der Einlagerung vorgegebenen Lagerplätzen angeordnet, wie dies beispielsweise bei den früher üblichen Schubladensystemen in Apotheken der Fall war, sondern eine Arzneimittelpackung wird unabhängig von der Art des Arzneimittels an einem Lagerplatz gelagert, dessen Ausmaße für die Dimensionen der einzulagernden Arzneimittelpackung optimal geeignet sind. Da die unterschiedlichen Arzneimittelverpackungen unterschiedliche Dimensionen aufweisen und ein stetiges Ein- und Auslagern stattfindet, ändert sich auch die Anordnung von Lagerplätzen auf einem Regalboden, d. h. die Lagerplätze als solche sind nicht einem bestimmten Abschnitt eines Regalbodens zugeordnet, sondern variieren dynamisch im Zuge der Ein- und Auslagerung. Natürlich ist einem Lagerplatz auch stets ein physikalischer Lagerort zugeordnet, der sich aber mit dem Lagerplatz ändert.

Obgleich sich die Arzneimittelpackungen bzgl. ihrer Dimensionen unterscheiden, haben sie alle eine ebene Grundfläche und orthogonal zu der Grundfläche ausgerichtete, parallele Seitenflächen, bei denen die Klemmbacken zum Auslagern angreifen können. Bei bekannten Kommissioniervorrichtungen können aufgrund der Ausgestaltung des Greifers und der Regalböden beliebige Flaschen nur dann gelagert werden, wenn diese in speziellen Trägern angeordnet sind, die ihren Dimensionen nach üblichen Arzneimittelpackungen gleichen und demnach entsprechend bewegt werden können. Eine Lagerung von Flaschen ohne solche Träger ist nur mit Einschränkungen möglich; beispielsweise können schmale und hohe Flaschen mit bekannten Kommissioniervorrichtungen nicht ohne Träger gelagert werden.

Aus der US 2006/0182609 A1 ist eine Kommissioniervorrichtung bekannt, in welcher kreiszylinderförmige Arzneimittelpackungen mit ebenen Stirnflächen stehend auf einer solcher Stirnfläche gelagert werden können. Die US 2014/0154044 A1 offenbart einen Greifer zum Ein- und Auslagern von Stückgütern. Der Greifer umfasst einen verfahrbaren Auflagetisch mit einem ausfahrbaren Mitnehmer, der zum Auslagern von Stückgütern in eine Ausnehmung eines Lagerplatzes hinter das auszulagernde Stückgut bewegbar ist. Die EP 2 581 328 A1 offenbart ein Regalbediengerät für Lagerfächer mit offenem Fachboden, mit einem Lastaufnahmemittel und wenigstens einem im Wesentlichen horizontal teleskopierbaren Warentransportgreifer mit wenigstens einer Warenauflage zum Untergreifen einer Ware. Die DE 10 2009 042572 A1 offenbart eine Kommissioniervorrichtung zum automatisierten Ein- und Auslagern von Artikeln in einem Regallager. Die Kommissioniervorrichtung umfasst eine Vereinzelungsvorrichtung, in der einzulagernde Artikel identifiziert werden, wobei eine Identifizierung durch ein Greifen eines der Artikel mittels einer Greifvorrichtung und dem Heranführen des Artikels durch die Greifvorrichtung an einen Scanner erfolgt, und ein Handhabungsgerät zum Ein- und Auslagern der Artikel auf und ist dadurch gekennzeichnet, dass die Greifvorrichtung die identifizierten Artikel in einem Abschnitt des Regallagers absetzt, wo sie von dem Handhabungsgerät wieder aufgenommen werden. Die US 2008/0302815 A1 offenbart ein Transport- und Lagersystem für Arzneimittelpackungen, bei welchem flaschenförmige Arzneimittelpackungen stehend gelagert werden und bewegt werden können.

Es ist daher Aufgabe der vorliegenden Erfindung, eine Kommissioniervorrichtung bereitzustellen, in welcher beliebige Flaschen ohne einen Träger oder eine Umverpackung liegend gelagert werden können. Ferner ist es Aufgabe der Erfindung, ein Verfahren zum Auslagern der Flaschen bereitzustellen.

Die Aufgabe wird erfindungsgemäß gelöst durch eine Kommissioniervorrichtung zum Lagern von liegenden Flaschen gemäß Patenanspruch 1. Die erfindungsgemäße Kommissioniervorrichtung umfasst eine Mehrzahl von Lagerplätzen für liegende Flaschen, ein vor den Lagerplätzen horizontal in einer X-Richtung (regelmäßig die Längsrichtung der Kommissioniervorrichtung) und vertikal in einer Z-Richtung verfahrbares, mit einer Steuereinrichtung gekoppeltes und einen Greifer aufweisendes Bediengerät, zumindest eine Einlagerungseinrichtung, mit welcher liegende Flaschen in die Kommissioniervorrichtung bewegt werden und von welcher das Bediengerät liegende Flaschen entnehmen kann, zumindest eine Identifiziereinrichtung zum Identifizieren von Flaschen sowie eine Entladeeinrichtung, an welche Flaschen von dem Bediengerät zum Auslagern aus der Kommissioniervorrichtung übergeben werden.

Eine Mehrzahl der Lagerplätze (aber nicht notwendigerweise alle) Lagerplatz-Aufnahmen und die Einlagerungseinrichtung weist bzw. weisen zumindest eine Einlagerungs-Aufnahme für Flaschen auf, wobei eine Lagerplatz-Aufnahme und die Einlagerungs-Aufnahmen derart ausgebildet sind, dass die Flaschen in diesen liegend gesichert gegen ein Verrollen gehalten sind. Ferner umfasst der Greifer erfindungsgemäß ein Greifmittel, welches derart ausgebildet ist, dass liegende Flaschen von den Einlagerungs- und Lagerplatz-Aufnahmen bewegbar sind, indem die Flaschen von dem Greifmittel angehoben werden.

Bei bekannten Kommissioniervorrichtungen ist jedem Lagerplatz ein Abschnitt eines ebenen Regalbodens zugeordnet, auf welchem die Arzneimittelpackung abgelegt wird. Über die Zeit variiert die Verteilung der Lagerplätze, da Arzneimittelpackungen unterschiedlicher Größen ein- und ausgelagert werden. Da auf solchen ebenen Regalböden Flaschen nicht liegend ohne ein Verrollen lagerbar sind, sieht die erfindungsgemäße Kommissioniervorrichtung vor, dass eine Mehrzahl der Lagerplätze die vorgenannten Lagerplatz-Aufnahmen aufweisen, in bzw. auf welchen eine Flasche liegend gelagert werden kann, ohne dass sie orthogonal zu der Längsrichtung der Flasche verrollt. Die Lagerplatz-Aufnahme übernimmt die Rolle des Regalbodenabschnitts bei bekannten Kommissioniervorrichtungen, bewirkt also die eigentliche physikalische ortsfeste Lagerung.

Da die Flaschen zur platzoptimierten Lagerung liegend gelagert werden, ist es erfindungsgemäß vorgesehen, dass diese auch liegend in die Kommissioniervorrichtung bewegt werden. Zwar könnte man die Flaschen auch stehend auf einem üblichen Einlagerungsband in die Kommissioniervorrichtung bewegen, dies würde es aber notwendig machen, die Flaschen vor Einlagerung zu drehen. Ferner besteht eine erhöhte Gefahr, dass die Flaschen bei der Bewegung in die Kommissioniervorrichtung umkippen. Da eine liegende Bewegung von Flaschen mit einer üblichen, als Förderband ausgebildeten Einlagerungseinrichtung ohne ein Verrollen der Flaschen nicht möglich ist, ist es erfindungsgemäß vorgesehen, dass die Einlagerungseinrichtung eine Mehrzahl von Einlagerungs-Aufnahmen aufweist, die dieses Verrollen der Flaschen verhindern.

Die oben erwähnten Lagerplätze sind auch bei der erfindungsgemäßen Kommissioniervorrichtung nicht ortsfest, sondern sind abhängig von den Dimensionen einzulagernder Flaschen. Wenn beispielsweise ein Abschnitt der Kommissioniervorrichtung, der die Lagerplätze bereithält, 30 cm tief ist, können dort theoretisch beispielsweise drei 8 cm hohe bzw. tiefe oder zwei 14 cm hohe bzw. tiefe Flaschen liegend hintereinander gelagert werden. Sollen drei Flaschen hintereinanderliegend gelagert werden, können in dieser Reihe drei Lagerplätze bereitgestellt werden, in dem anderen Fall lediglich zwei. Entsprechendes gilt für die Lagerplatz-Aufnahmen. Um bei dem vorgenannten Beispiel zu bleiben, kann eine Gesamt-Lagerplatz-Aufnahme zwei oder drei Lagerplatz-Aufnahmen bereitstellen, also jeweils eine Lagerplatz-Aufnahme pro Lagerplatz.

Indem auf der Einlagerungseinrichtung und den Lagerplätzen Einlagerungs-Aufnahmen sowie Lagerplatz-Aufnahmen bereitgestellt werden, die ein Verrollen der aufliegenden Flaschen verhindern, ist es möglich, diese im Wesentlichen genauso zu handhaben, wie dies bei eckigen Arzneimittelpackungen der Fall ist, da es Einlagerungs- und Lagerplatz-Aufnahmen gewährleisten, dass einer Steuereinrichtung jederzeit die exakte Positionierung einer Flasche bekannt ist. Auf diese Weise können Flaschen schnell und platzsparend in einer Kommissioniervorrichtung gelagert und aus dieser ausgelagert werden. Es bedarf keiner aufwendigen Drehvorrichtungen für die Flaschen, auch ist die Gefahr, dass die Flaschen umkippen, wie dies bei stehender Lagerung jederzeit passieren kann, nicht gegeben. Es besteht ferner die Möglichkeit, in einer Kommissioniervorrichtung sowohl Flaschen als auch übliche Arzneimittelpackungen zu lagern, indem die Einlagerungseinrichtung lediglich abschnittsweise mit Einlagerungs-Aufnahmen für Flaschen versehen wird, und auch nur ein Teil der Lagerplätze Lagerplatz-Aufnahmen aufweist.

Wenn im Zuge dieser Anmeldung von dem Begriff "Flasche" die Rede ist, soll stets auch der Plural umfasst sein. Wenn beispielsweise ausgeführt wird, dass mit dem Greifmittel eine Flasche von der Einlagerungseinrichtung auf einen Lagerplatz bewegt wird, so soll auch umfasst sein, dass mit dem Greifmittel mehrere, dann regelmäßig gleichförmige Flaschen, von der Einlagerungseinrichtung auf mehrere Lagerplätze bzw. den Lagerplätzen zugeordnete Lagerplatz-Aufnahmen bewegt werden. Unter Flasche soll jedes zumindest abschnittsweise kreiszylinderförmige Behältnis verstanden sein, also eine übliche Flasche, aber auch Dosen etc.

Erfindungsgemäß ist es vorgesehen, dass die Einlagerungs-Aufnahmen und/oder die Lagerplatz-Aufnahmen durch eine Mehrzahl von parallelen Einlagerungs-Streben bzw. parallelen Lagerplatz-Streben gebildet sind. Bei einer entsprechenden Ausführungsform weist das Einlagerungsmittel der Einlagerungseinrichtung eine Mehrzahl von parallelen Einlagerungs-Streben auf, die bei ihren Enden geführt sind. Auch bei dieser Ausführungsform ist es denkbar, dass die Einlagerungseinrichtung einen Abschnitt für Arzneimittelpackungen sowie einen Abschnitt für Flaschen aufweist. Die Lagerplatz-Streben könnten als einfache Winkel an einer Wandung der Kommissioniervorrichtung ausgebildet sein. Jeweils ein Paar der Lagerplatz-Streben bzw. Einlagerungs-Streben bildet dann die Einlagerungs-Aufnahme bzw. Lagerplatz-Aufnahme. Ein Vorteil insbesondere der Verwendung der Lagerplatz-Streben ist es, dass ein definierter Lagerbereich durch weniger Material und damit Gewicht bereitgestellt werden könnte (im Vergleich zu einem Regalboden mit gleichen Ausmaßen).

Erfindungsgemäß ist es ferner vorgesehen, dass das Greifmittel des Greifers zwei gabelförmig ausgebildete Zinken aufweist, die orthogonal zu der X-Richtung in einer Y-Richtung sowie der Z-Richtung verfahrbar sind und die derart ausgebildet sind, dass sie in Y-Richtung in einen Raum, der durch den Querschnitt der auszulagernden Flasche gegeben ist und sich unterhalb des maximalen Querschnitts befindet, bewegbar sind.

In diesem Zusammenhang ist es weiter bevorzugt, dass die Zinken des Greifmittels ortsfest an dem Greifmittel angeordnet sind, wobei der Abstand DI zwischen gegenüberliegenden inneren Außenflächen der Zinken größer als die äußere Aufnahmenbreite AB ist. Wie bereits oben dargelegt, ist eine entsprechende Ausführungsform konstruktiv besonders einfach, da ein Parallelverfahren der Zinken nicht notwendig ist.

Im Hinblick auf die Zinken ist es bei bevorzugten Ausführungsformen bevorzugt, dass die Zinken (kreis)zylinderförmig oder stabförmig ausgebildet sind, wobei bei stabförmiger Ausgestaltung die beiden Zinken um eine Längsachse drehbar sein können. Die (kreis)zylinderförmigen Zinken haben den Vorteil, dass diese sehr einfach gebaut und damit entsprechend kostengünstig sind. Die stabförmigen Zinken können eine größere Anlagefläche zur Kontaktierung einer auszulagernden Flasche bereitstellen. So kann auch das Ziehen schwerer Flaschen über einen Kraftschluss möglich sein.

Bei einer Kommissioniervorrichtung, bei welcher sowohl Flaschen als auch Arzneimittelpackungen gelagert werden, ist es besonders vorteilhaft, wenn sich die stabförmigen Zinken um ihre Längsachse drehen lassen. Wenn die beiden Innenflächen parallel zueinander ausgerichtet sind, die Zinken also senkrecht ausgerichtet sind, können diese besonders gut zum Auslagern von Arzneimittelpackungen verwendet werden. Sind die stabförmigen Zinken V-förmig zueinander angestellt, also "unten" beide nach innen gedreht, eignen sich die Zinken gut für das Auslagern von Flaschen.

Bei einer bevorzugten Ausführungsform ist es vorgesehen, dass zumindest ein Zinken bei seinem Ende einen Mitnehmer aufweist. Dieser kann einteilig mit dem Zinken, also als eine Art Abschnitt des Zinkens, ausgebildet sein oder an dem Ende des Zinkens befestigt sein. Mit dem Mitnehmer kann (zusätzlich) ein Formschluss zwischen auszulagernder Flasche und Zinken erreicht werden, so dass auch schwere Flaschen von der Lagerplatz-Aufnahme gezogen werden können.

Vor dem Einlagern der Flaschen werden diese mittels der Identifizierungseinrichtung der Kommissioniervorrichtung identifiziert, so dass eine genaue Verknüpfung zwischen einzulagernder Flasche und Lagerplatz hergestellt werden kann. Der Steuereinrichtung können basierend auf den Identifizierungsdaten einer Flasche deren Dimensionen bekannt sein. Es kommt aber häufig vor, dass die Hersteller von Arzneimitteln die Dimensionierung der Verpackung bzw. Flasche bei Beibehaltung des Inhalts ändern. Beispielsweise kann Medikament X, Flascheninhalt 200 ml, eine Zeit lang in einer Flasche mit der Höhe H1 und dem Durchmesser D1 vermarktet werden, dann aber, beispielsweise aus ästhetischen Gründen, auf eine Flasche mit der Höhe H2 und dem Durchmesser D2 umgestellt werden. Durch die Verwendung der Vermessungseinrichtung ist gewährleistet, dass die Steuereinrichtung jederzeit über die genaue Dimensionierung einer einzulagernden Flasche informiert ist, so dass anhand dieser Informationen stets der ideale Lagerplatz innerhalb der Kommissioniervorrichtung ermittelt werden kann.

Die Aufgabe wird ferner gelöst durch ein Verfahren zum Auslagern von liegenden Flaschen aus einer Kommissioniervorrichtung nach Anspruch 6. Verfahrensgemäß wird mit einer Steuereinrichtung ein Lagerplatz einer auszulagernden Flasche ermittelt, ein mit der Steuereinrichtung gekoppeltes Bediengerät innerhalb der Kommissioniervorrichtung zu dem ermittelten Lagerplatz, der durch eine Mehrzahl von parallelen Lagerplatz-Streben gebildet wird, verfahren und die ermittelte Flasche mit einem Greifer des Bediengerätes von einer dem Lagerplatz zugeordneten Lagerplatz-Aufnahme entnommen, wobei die Lagerplatz-Aufnahme durch eine Mehrzahl von parallelen Lagerplatz-Streben gebildet wird und wobei die Lagerplatz-Aufnahme derart ausgebildet ist, dass die Flasche in dieser liegend gesichert gegen ein Verrollen gehalten ist.

Dazu werden Zinken eines Greifmittels des Greifers parallel zu einer Lagerplatz-Aufnahme einer auszulagernden Flasche in Y-Richtung zumindest abschnittsweise in einen Raum, der durch den Querschnitt der auszulagernden Flasche gegeben ist und sich unterhalb des maximalen Querschnitts befindet, bewegt und anschließend werden die Zinken in Z-Richtung nach oben bewegt und/oder gedreht und dadurch wird ein Formschluss zwischen den Zinken und einer auszulagernden Flasche hergestellt. Über den Kraftschluss wird die auszulagernde Flasche von der durch eine Mehrzahl von parallelen Lagerplatz-Streben gebildeten Lagerplatz-Aufnahme, die derart ausgebildet ist, dass die Flasche in dieser liegend gesichert gegen ein Verrollen gehalten ist, bewegt. Anschließend wird die auszulagernde Flasche mit dem Bediengerät an eine Entladeeinrichtung der Kommissioniervorrichtung übergeben.

Nach dem Verfahren ist es also vorgesehen, die Zinken in einen von dem Querschnitt gebildeten Raum unterhalb des maximalen Querschnitts zu bewegen, also den Freiraum unterhalb des maximalen Querschnitts in X-Richtung, d. h. in einen Raum, der durch eine Projektion des Außenumfanges der Flasche auf eine darunter befindliche Ebene definiert ist. Es ist ausreichend, wenn lediglich ein Abschnitt der Zinken "unter" die Flasche bewegt wird, also in den vorgenannten Raum. Wesentlich ist aber, dass der minimale Abstand gegenüberliegender Außenflächen der Zinken geringer ist als der Durchmesser der auszulagernden Flasche. Um einen Kraftschluss zwischen den Zinken und der Flasche herzustellen, werden die Zinken in Z-Richtung nach oben bewegt. Sobald der Kraftschluss hergestellt ist, kann über diesen die Flasche von dem Lagerplatz wegbewegt werden.

Erfindungsgemäß ist es vorgesehen, dass die auszulagernde Flasche von Lagerplatz bewegt wird, indem die Flasche nach Herstellen des Kraftschlusses über eine Bewegung in Z-Richtung von der durch eine Mehrzahl von parallelen Lagerplatz-Streben gebildeten Lagerplatz-Aufnahme gehoben wird und anschließend die Zinken des Greifmittels in Y-Richtung zurückbewegt werden.

Im Nachfolgenden werden bevorzugte Ausführungsformen der erfindungsgemäßen Kommissioniervorrichtung sowie bevorzugte Ausführungsformen des erfindungsgemäßen Verfahrens unter Bezugnahme auf die Zeichnung detaillierter beschrieben, in welcher
Figur 1 eine schematische Seitenansicht einer beispielhaften Kommissioniervorrichtung zeigt,
Figur 2 eine Schnittansicht in Y-Richtung durch die Kommissioniervorrichtung zeigt,
Figur 3 eine Draufsicht auf die Kommissioniervorrichtung zeigt,
Figur 4 eine Schrägansicht der Kommissioniervorrichtung zeigt,
Figur 5 eine weitere Seitenansicht der Kommissioniervorrichtung zeigt, wobei zusätzliche Bauteile dargestellt sind,
Figur 6 eine schematische Ansicht einiger Bauteile der Kommissioniervorrichtung zeigt,
Figur 7 eine Detailansicht zur Figur 6 zeigt,
Figur 8 eine Detailansicht des Einlagerungsmittels mit aufgebrachten Einlagerungs-Sockeln zeigt,
Figur 9 eine Detailansicht von auf Lagerplatz-Sockeln aufliegenden Flaschen zeigt,
Figur 10 eine Seitenansicht eines Lagerbereiches von Flaschen zeigt,
Figur 11 eine weitere Seitenansicht eines Lagerbereiches zeigt,
Figuren 12a - 12d schematische Momentaufnahmen einer Ausführungsform des erfindungsgemäßen Verfahrens darstellen,
Figuren 13a - 13e ein alternatives Verfahren veranschaulichen, und
Figur 14 verschiedene Arten von Lagerplatz-Aufnahmen darstellt.

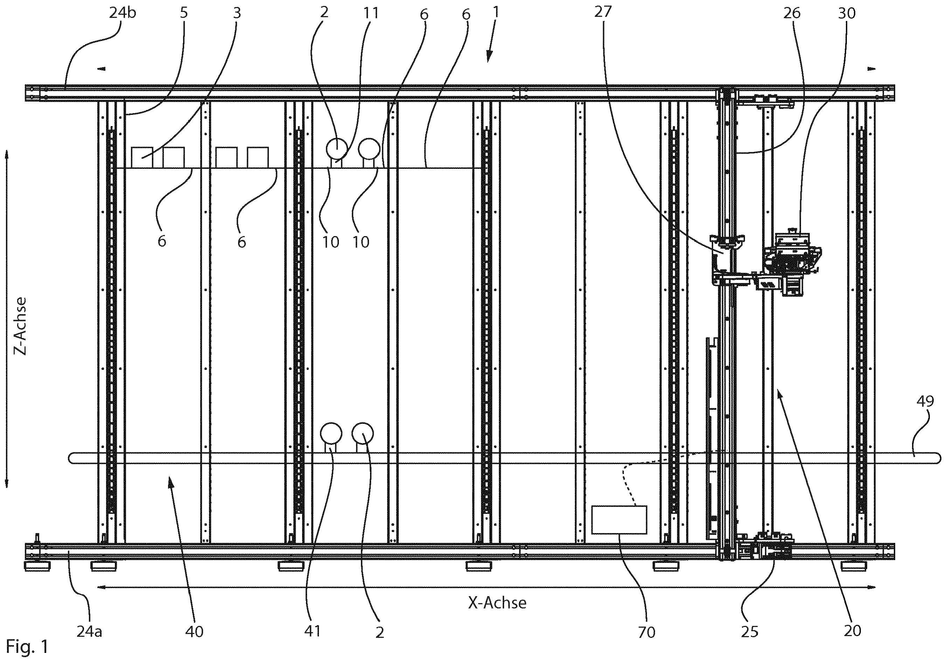

Figur 1 zeigt eine seitliche Schnittansicht einer Kommissioniervorrichtung 1. Der Schnitt ist geführt durch eine mittlere Gasse, in welcher ein Bediengerät 20 an einer vertikalen Führung 26 und zwei horizontalen Führungen 24a, 24b verfahrbar ist. Das Bediengerät 20 umfasst zwei Antriebe 25, 27, um einen Greifer 30 horizontal und vertikal in der Gasse zu verfahren. Bei der dargestellten Schnittansicht erkennt man eine Mehrzahl von senkrechten Trennwänden 5, zwischen denen eine Mehrzahl von Regalböden 6 angeordnet ist. Um die Darstellung nicht zu überfrachten, sind lediglich vier Regalböden dargestellt, auf zwei der Regalböden 6 sind übliche Arzneimittelpackungen 3 angeordnet, auf zwei anderen Regalböden 6 Lagerplatz-Aufnahmen 11, auf denen jeweils eine Flasche 2 angeordnet ist. Eine Lagerplatz-Aufnahme 11 korrespondiert mit einem dazugehörigen Lagerplatz 10, wobei es sich bei einem solchen Lagerplatz um einen "virtuellen" Lagerplatz handelt, dessen Anordnung und Größe jeweils mit der einzulagernden Flasche variiert.

Im unteren Bereich der Kommissioniervorrichtung ist eine Einlagerungseinrichtung 40 gezeigt, mit welcher Flaschen von außerhalb in die Kommissioniervorrichtung bewegt werden können. Auf dem Einlagerungsmittel 49, das bei der gezeigten Ausführungsform als umlaufendes Band angedeutet ist, sind zwei Einlagerungs-Aufnahmen 41 angedeutet, auf denen jeweils eine einzulagernde Flasche 2 angeordnet ist. Sowohl die Einlagerungseinrichtung 40 als auch das Bediengerät 20 sind mit einer Steuereinrichtung 70 gekoppelt, die bei Figur 1 schematisch angedeutet ist. Normalerweise umfasst eine Kommissioniervorrichtung zwei der in Figur 1 dargestellten "Regalreihen", wobei in einer Gasse zwischen den gegenüber angeordneten Regalreihen das Bediengerät verfahrbar ist.

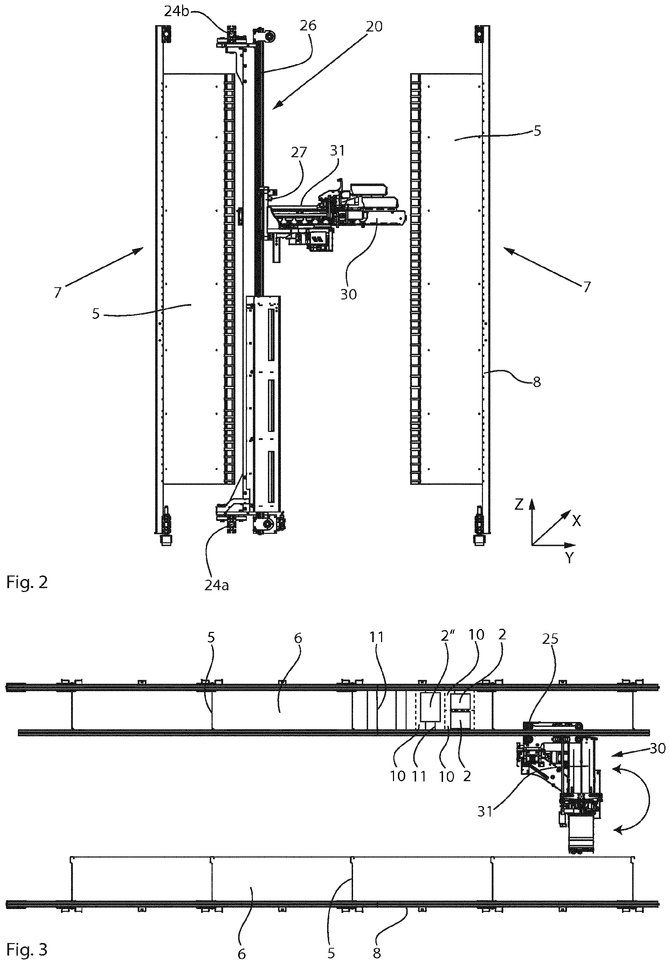

Figur 2 zeigt eine Schnittansicht durch die Kommissioniervorrichtung, wobei bei diesem Schnitt in Y-Richtung ersichtlich ist, dass die Ausführungsform zwei gegenüberliegende Regalreihen 7 umfasst. Figur 2 ist ferner zu entnehmen, dass das Bediengerät auf den horizontalen Führungen 24a, 24b und der vertikalen Führung 26 in Z- und X-Richtung verfahrbar ist. Soll auf einen Lagerplatz in der "rechten" Regalreihe 7 zugegriffen werden, wird der Greifer 30 um 180 Grad um seine Längsachse gedreht. Wie dies aus Figur 2 ersichtlich ist, sind die Regalreihen 7 üblicherweise mit einer Abdeckung 8 nach außen verschlossen.

Figur 3 zeigt eine Draufsicht auf einen Abschnitt der Kommissioniervorrichtung. Wie zu erkennen ist, sind zwischen einer Mehrzahl von senkrechten Regalwänden mehrere Regalböden 6 angeordnet. Lediglich bei einem Regalboden sind mehrere Lagerplatz-Aufnahmen 11 angedeutet. Bei Figur 3 ist auch zu erkennen, dass die Lagerplätze 10 sich in Abhängigkeit von den Dimensionen der Flaschen auf einem Regalboden verteilen. Während in der rechten Lagerreihe zwei Flaschen 2 hintereinander gelagert sind, und damit zwei Lagerplätze vorhanden sind, ist links daneben lediglich eine längere Flasche 2" gelagert, so dass in dieser Lagerreihe lediglich ein Lagerplatz 10 bereitsteht. Sollte die Flasche 2" ausgelagert werden, könnten in dieser Regalreihe beispielsweise zwei gleichgroße Lagerplätze entstehen, wie es in der rechten Lagerreihe dargestellt ist.

Bei Figur 3 ist der Greifer 30 des Bediengerätes zu erkennen, insbesondere die Greifmittel 31, die bei der gezeigten Ausführungsform als zwei Zinken eines gabelförmigen Greifmittels ausgebildet sind, wobei auf die Greifmittel nachfolgend detaillierter eingegangen wird.

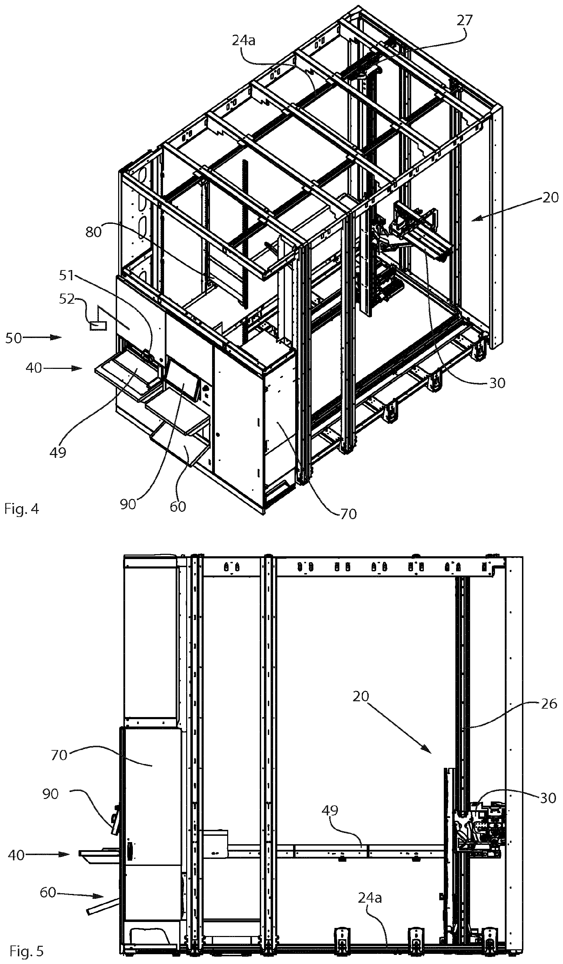

Figur 4 zeigt eine Schrägansicht der Kommissioniervorrichtung, wobei ein Großteil der Verkleidungselemente fortgelassen ist, um die im Inneren angeordneten Bauteile besser erkennen zu können. Bei dieser Darstellung erkennt man insbesondere die Anordnung der Einlagerungseinrichtung 40 im Hinblick auf die gesamte Kommissioniervorrichtung. Ein Abschnitt des Einlagerungsmittels 49 der Einlagerungseinrichtung 40 ragt "vorne" aus der Kommissioniervorrichtung heraus. Auf diesem Abschnitt werden die einzulagernden Arzneimittelpackungen oder Flaschen abgelegt. Auf eine Darstellung der Einlagerungs-Aufnahmen wurde bei dieser Darstellung verzichtet, da lediglich der allgemeine Gesamtaufbau veranschaulicht werden soll.

Bei der gezeigten Kommissioniervorrichtung ist über dem aus der Kommissioniervorrichtung herausragenden Abschnitt der Einlagerungseinrichtung eine Identifizierungseinrichtung 50 angeordnet, die bei der gezeigten Ausführungsform ein fest installiertes Identifizierungsmittel 51 umfasst, welches oberhalb der Öffnung des herausragenden Abschnittes angeordnet ist. Darüber hinaus umfasst die Identifizierungseinrichtung 50 ein mobiles Identifizierungsmittel 52, welches von einem Benutzer händisch bedient werden kann, um beispielsweise einen Barcode einer Flasche zu scannen.

In Einlagerungsrichtung hinter dem herausragenden Abschnitt der Einlagerungseinrichtung ist über dieser eine Vermessungseinrichtung 80 angedeutet, mit welcher die an der Vermessungseinrichtung 80 vorbeigeführten Flaschen im Hinblick auf ihren Durchmesser und ihre Länge vermessen werden können.

Im rechten vorderen Abschnitt der Kommissioniervorrichtung ist noch ein Abschnitt der Entladeeinrichtung 60 dargestellt, über welchen Flaschen oder Arzneimittelpackungen aus der Kommissioniervorrichtung ausgegeben werden können. Über der Entladeeinrichtung 60 ist eine Anzeigeeinrichtung 90 für das Bedienpersonal angedeutet. Darüber hinaus ist die tatsächliche Anordnung der Steuereinrichtung 70 innerhalb der Kommissioniervorrichtung angedeutet.

Figur 5 zeigt eine Seitenansicht des in Figur 4 Wiedergegebenen und man erkennt, dass sich die Einlagerungseinrichtung 40 in X-Richtung fast vollständig durch die Kommissioniervorrichtung erstreckt. Dies hat insbesondere den Vorteil, dass die gesamte Länge der Einlagerungseinrichtung 40 als eine Art Zwischenpuffer genutzt werden kann, so dass beispielsweise das Bedienpersonal schneller Flaschen auflegen und einlagern kann als das Bediengerät sie auf den endgültigen Lagerplätzen anordnen kann.

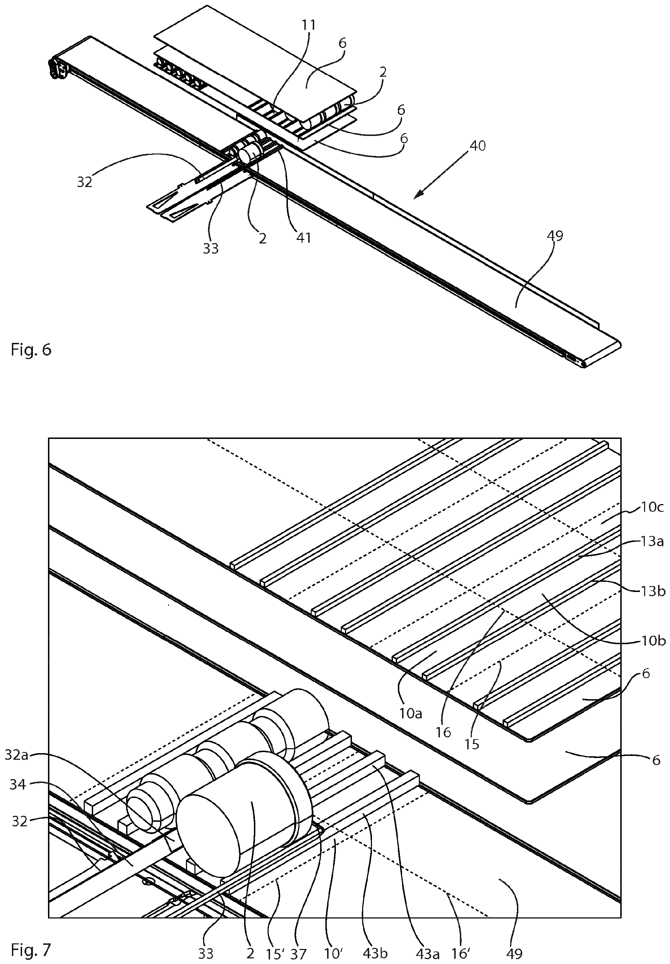

Figur 6 zeigt eine schematische Ansicht einiger Bauteile der Kommissioniervorrichtung, und zwar die Einlagerungseinrichtung 40, Teile des Greifers, einige Regalböden 6 sowie auf der Einlagerungseinrichtung und den Regalböden angeordnete Einlagerungs- und Lagerplatz-Aufnahmen 41, 11.

Figur 7 zeigt eine Detailansicht gemäß Figur 6, wobei zur besseren Veranschaulichung der Lagerplatz-Aufnahmen die in Figur 6 noch dargestellten Flaschen fortgelassen sind. Im oberen Abschnitt gemäß Figur 7 sind zwei Regalböden 6 angedeutet, wobei auf dem oberen Regalboden eine Mehrzahl von Lagerplatz-Aufnahmen in Form von Lagerplatz-Sockeln 13 dargestellt ist, die jeweils durch ein Paar paralleler Längsstreben 13a, 13b gebildet sind. Jeweils ein Paar von parallelen Längsstreben 13a, 13b stellt eine oder mehrere Einlagerungs-Aufnahmen bereit, und zwar in Abhängigkeit davon, wie die zu lagernden Flaschen dimensioniert sind. Bei Figur 7 wird davon ausgegangen, dass in dem sichtbaren Bereich lediglich gleichdimensionierte Flaschen gelagert werden, und zwar jeweils drei hintereinander in einer Lagerreihe, wobei eine Lagerreihe von einem Einlagerungs-Sockel vorgegeben wird. Dementsprechend ergeben sich pro Lagerreihe drei Lagerplätze 10a, 10b und 10c sowie drei dazugehörige Lagerplatz-Aufnahmen, die in diesem Fall baulich miteinander verbunden sind. Die Trennung der einzelnen Lagerplätze ist bei Figur 7 durch gestrichelte Lagerplatztrennlinien 15, 16 angedeutet.

Im unteren linken Teil ist ein Abschnitt eines Einlagerungs-Mittels 49 mit zwei darauf aufgebrachten Einlagerungs-Aufnahmen dargestellt, die wiederum als Einlagerungs-Sockel ausgebildet sind und von einem Paar von parallelen Streben 43a, 43b bereitgestellt werden. Bei dem rechten Einlagerungs-Sockel ergeben sich aufgrund der Größe der Flasche 2, die bei der gezeigten Ausführungsform als eine Art Dose ausgebildet ist, zwei Lagerplätze 10', bei dem linken Einlagerungs-Sockel aufgrund der geringeren Größe der Flaschen drei Lagerplätze.

Von dem Greifer sind lediglich die Zinken 32, 33 dargestellt, die als V-förmig angestellte langgestreckte Stäbe ausgebildet sind, die bei ihren Enden haftverstärkende Abschnitte 32a aufweisen. Über die sich gegenüberliegenden Innenflächen der Zinken, von denen lediglich Innenfläche 34 des Zinkens 32 ersichtlich ist, findet ein Kraftschluss zwischen den Innenflächen und der Flasche statt. Bei der in Figur 7 gezeigten Kommissioniervorrichtung umfassen die Zinken bei ihren Enden jeweils einen Mitnehmer, von denen in Figur 7 lediglich der Mitnehmer 37 der Zinke 33 zu erkennen ist. Ein Abschnitt des Mitnehmers 37 hintergreift ein Ende der Flasche, so dass zwischen Flasche und Zinken nicht nur ein Kraft-, sondern auch ein Formschluss vorhanden ist.

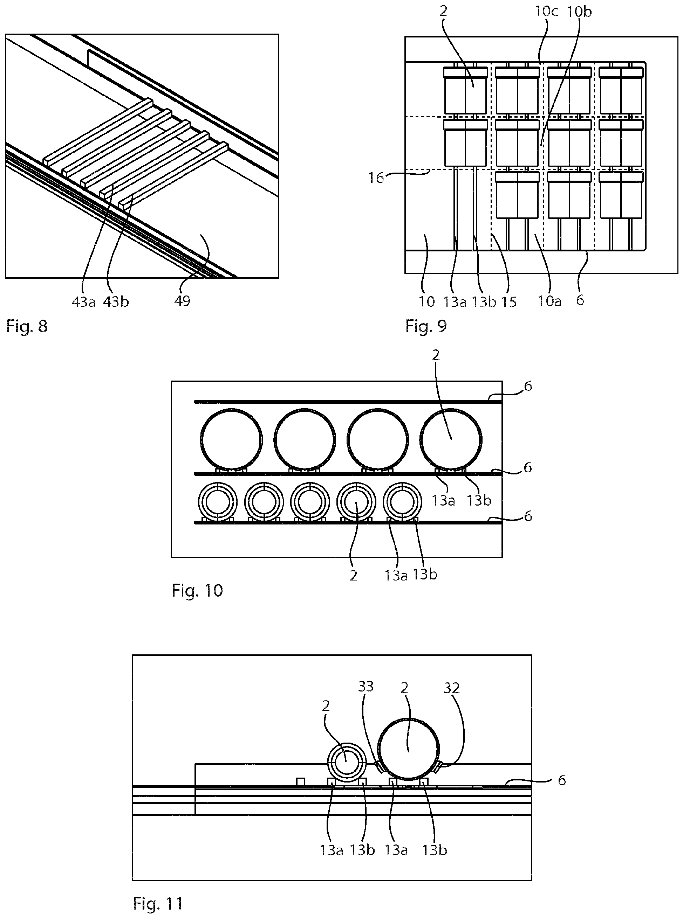

Figur 8 zeigt noch einmal eine Detailansicht eines Einlagerungs-Mittels 49 mit zwei Einlagerungs-Aufnahmen, die jeweils als Einlagerungs-Sockel, umfassend zwei parallele Streben 43a, 43b, ausgebildet sind.

Figur 9 zeigt einen Abschnitt eines Regalbodens 6 mit vier parallelen Einlagerungs-Sockeln, die jeweils aus zwei parallelen Streben 13a, 13b, gebildet sind. Jeder der dargestellten Einlagerungs-Sockel stellt Lagerplatz-Aufnahmen für jeweils drei Flaschen bereit. Wie bereits dargelegt, sind die Lagerplätze und die Anzahl der Lagerplatz-Aufnahmen (pro Lagerreihe) abhängig von den Dimensionen der eingelagerten Flaschen.

Figur 10 zeigt eine Seitenansicht eines Lagerbereiches von Flaschen. Insbesondere veranschaulicht Figur 10, dass die horizontale Beabstandung der Regalböden derart unterschiedlich ist, dass diese Beabstandung an Flaschen mit unterschiedlichem Durchmesser angepasst ist. Wie dies in Figur 10 bereits zu erahnen ist, sind die für die unterschiedlichen Flaschen verwendeten Lagerplatz-Aufnahmen, bestehend aus zwei parallelen Streben 13a, 13b, bei den Flaschen mit kleinem und denen mit großem Durchmesser gleich.

Figur 11 zeigt eine weitere Ansicht eines Lagerbereiches für Flaschen und veranschaulicht, dass es zur optimalen Nutzung eines Lagerbereiches auch möglich ist, kleine neben großen Flaschen zu lagern, insbesondere wenn es nicht möglich ist, aufgrund des Durchmessers der großen Flaschen zwei von diesen auf benachbarten Lagerplatz-Aufnahmen zu lagern.

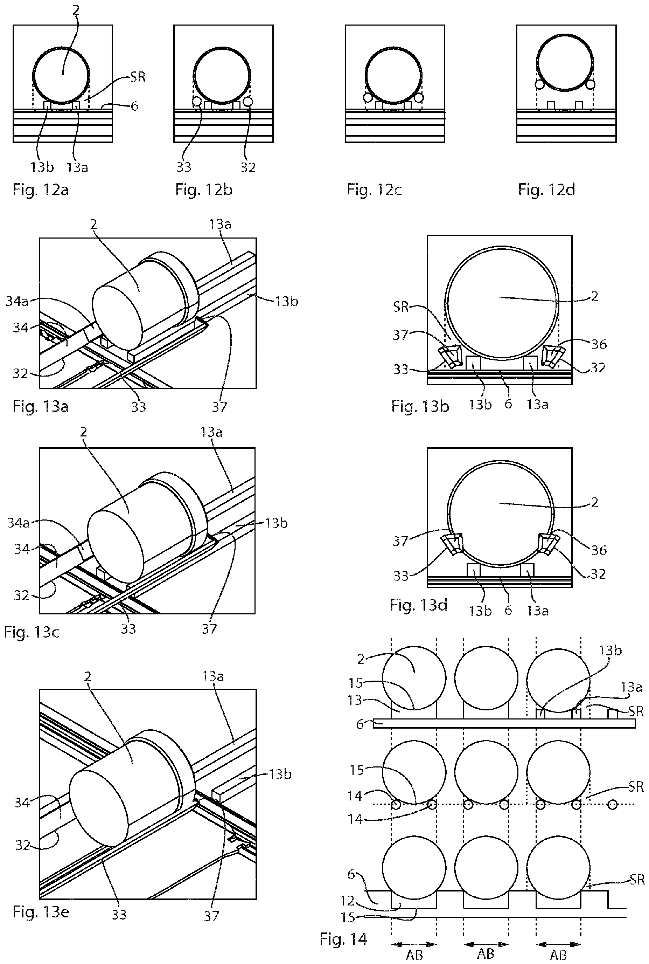

Figuren 12a - 12b zeigen schematische Momentaufnahmen einer Ausführungsform des erfindungsgemäßen Verfahrens. Mit der Steuereinrichtung wurde der Lagerplatz der auszulagernden und in den Figuren 12a - 12d wiedergegebenen Flasche 2 bestimmt. Wie in Figur 12a gezeigt, liegt diese auf einer Lagerplatz-Aufnahme auf, die bei der gezeigten Ausführungsform als Lagerplatz-Sockel ausgebildet ist, der wiederum durch zwei parallele Streben 13a, 13b ausgebildet ist. Von oben betrachtet bildet der Querschnitt der Flasche eine Fläche auf den Regalboden 6 ab, die nachfolgend als Querschnitt-Schattenfläche oder kurz Schattenfläche SR bezeichnet wird. Wie es in Figur 12b zu erkennen ist, werden zum Auslagern der Flasche die Zinken 32, 33, die bei der gezeigten Ausführungsform als kreisrunde Stäbe ausgebildet sind, zumindest abschnittsweise in den Schattenraum SR hineinbewegt. Sobald die Zinken weit genug im Hinblick auf die Länge der Flasche bewegt sind, werden die Zinken in Z-Richtung nach oben bewegt, bis ein Kraftschluss zwischen den inneren Außenflächen der Zinken und der Flasche stattfindet, wie dies in Figur 12c wiedergegeben ist. Bei der in den Figuren 12a - 12d gezeigten Ausführungsform wird die Flasche sodann über eine weitere Bewegung der Zinken nach oben in Z-Richtung von der Lagerplatz-Aufnahme entfernt. Sobald die Flasche weit genug angehoben ist, kann die Flasche über eine Bewegung in Y-Richtung zurück zu dem Greifer bewegt werden.

Die Figuren 13a - 13e zeigen eine weitere Möglichkeit der Auslagerung. Auch hier ist bereits ein fortgeschrittenes Stadium des Verfahrens gezeigt, und zwar bei welchem die Zinken, die als V-förmig gestellte Stäbe ausgebildet sind, in den Schattenraum SR unterhalb der auszulagernden Flasche bewegt sind. Bei der gezeigten Ausführungsform sind an den Enden der Zinken 32, 33 Mitnehmer 36, 37 angeordnet (siehe insbesondere Figuren 13b, 13d). Wie es insbesondere in Figur 13b zu erkennen ist, liegt direkt nach dem Einführen der Zinken in den Schattenraum noch kein Kraftschluss zwischen den Zinken und der Flasche 2 vor. Um diesen herzustellen, werden die Zinken aus der in Figur 13a, 13b gezeigten Position in Z-Richtung nach oben bewegt, und zwar in die in Figuren 13c, 13d gezeigte Position. In dieser Stellung liegt nun ein Kraftschluss zwischen den inneren Außenflächen der Zinken und der auszulagernden Flasche 2 vor. Bei der gezeigten Ausführungsform liegt aufgrund der Mitnehmer ferner ein Formschluss zwischen den Mitnehmern 36, 37 und der Flasche 2 vor. Sobald der Form- und Kraftschluss hergestellt ist, kann die auszulagernde Flasche 2 durch eine Bewegung der Zinken in Y-Richtung hin zu dem Greifer bewegt werden, der in Figur 13e lediglich angedeutet ist.

In Figur 14 sind mehrere Varianten von Lagerplatz-Aufnahmen dargestellt. In der oberen Reihe sind die Lagerplatz-Aufnahmen als Lagerplatz-Sockel 13 dargestellt, die auf der Oberfläche eines Regalbodens 6 angeordnet sind. Die beiden linken Lagerplatz-Sockel 13 sind von ihrer oberen Form genau an die runde Form der einzulagernden Flasche angepasst. Dies sorgt zwar für eine gute Halterung der Flaschen, hat aber den Nachteil, dass diese gute Halterung nur bei genau auf die Rundung des Sockels abgestimmten Flaschen gegeben ist. Bei der Darstellung oben rechts ist der Einlagerungs-Sockel durch zwei parallele Streben 13a, 13b gebildet, was den Vorteil hat, dass Flaschen unterschiedlichen Durchmessers gelagert werden können.

Bei der mittleren Reihe sind die Lagerplatz-Aufnahmen erfindungsgemäß durch eine Mehrzahl von parallelen Lagerplatz-Streben 14 gebildet. Die Dichte der Belegung der parallelen Einlagerungs-Streben hängt von dem Durchmesser der einzulagernden Flaschen ab.

In der unteren Reihe sind mehrere als Lagerplatz-Vertiefungen 12 ausgebildete Lagerplatz-Aufnahmen dargestellt, die einfach als Nut in den Regalboden 6 eingebracht sein können.

Bei jeweils der rechten Flasche einer Reihe sind auch die Schattenräume SR angedeutet, die je nach Art der Lagerung der Flasche unterschiedlich groß ausfallen können.

Wie es Figur 14 zu entnehmen ist, umfassen sämtliche der gezeigten Lagerplatz-Aufnahmen eine sich in Y-Richtung erstreckende Vertiefung 15. Aufgrund der unterschiedlichen Ausgestaltung der Lagerplatz-Aufnahmen ist die Vertiefung jeweils anders ausgebildet, erstreckt sich aber stets in Y-Richtung und bildet einen "Mittelpunkt" für die Lagerung der Flaschen.

Ferner ist durch drei mit AB markierte Doppelpfeile angedeutet, dass die äußere Aufnahmenbreite bei allen Einlagerungs-Aufnahmen, unabhängig von deren Ausgestaltung, zum Lagern von Flaschen mit gleichem Durchmesser gleich groß ist.

In Figur 14 sind mehrere Arten von Lagerplatz-Aufnahmen dargestellt. Diese Art der Ausgestaltung der Lagerplatz-Aufnahmen lässt sich auch auf die Einlagerungs-Aufnahmen übertragen, und zwar ohne Änderungen an der Art der Aufnahme, so dass auf eine wiederholte Darstellung hier verzichtet wird.

Die gezeigten Ausführungsformen, insbesondere der Lagerplatz-Aufnahmen, sind lediglich bevorzugte Formen. Eine Fixierung der Flaschen kann auch mit anderen Mitteln erfolgen, beispielsweise durch seitliche Aufnahmen, die an Flaschen mit vorgegebenen Durchmessern angepasst sind. Auch denkbar sind Klemmhalterungen, die die Flasche klemmen, sobald diese mit dem Greifer in eine vorgegebene Position bewegt ist bzw. der Greifer eine vorgegebene Position erreicht.

## Patentansprüche

1. Kommissioniervorrichtung (1) zum Lagern von Flaschen (2) mit
einer Mehrzahl von Lagerplätzen (10) für Flaschen (2),
einem vor den Lagerplätzen (10) horizontal in einer X-Richtung (X) und vertikal in einer Z-Richtung (Z) verfahrbaren, mit einer Steuereinrichtung (70) gekoppelten und einen Greifer (30) aufweisenden Bediengerät (20),
zumindest einer Einlagerungseinrichtung (40), mit welcher Flaschen (2) in die Kommissioniervorrichtung (1) bewegt werden und von welcher das Bediengerät (20) Flaschen (2) entnehmen kann,
zumindest einer Identifiziereinrichtung (50) zum Identifizieren von Flaschen (2),
einer Entladeeinrichtung (60), an welche Flaschen (2) von dem Bediengerät zum Auslagern aus der Kommissioniervorrichtung (1) übergeben werden,
wobei eine Mehrzahl der Lagerplätze (10) Lagerplatz-Aufnahmen (11) und die Einlagerungseinrichtung (40) zumindest eine Einlagerungs-Aufnahme (41) für Flaschen (2) aufweist, wobei der Greifer (30) ein Greifmittel (31) aufweist, welches derart ausgebildet ist, dass Flaschen (2) von den Einlagerungs- und Lagerplatz-Aufnahmen (11, 41) bewegbar sind, indem die Flaschen (2) von dem Greifmittel (31) angehoben werden,
wobei die Einlagerungs-Aufnahmen (41) und/oder die Lagerplatz-Aufnahmen (11) durch eine Mehrzahl von parallelen Einlagerungs-Streben (43a, 43b) bzw. parallelen Lagerplatz-Streber (13a, 13b) gebildet sind, und
wobei das Greifmittel (31) zwei gabelförmig ausgebildete Zinken (32, 33) aufweist, die orthogonal zu der X-Richtung in einer Y-Richtung sowie der Z-Richtung verfahrbar sind und die derart ausgebildet sind, dass sie in Y-Richtung zumindest abschnittsweise in einen Raum, der durch den Querschnitt der auszulagernden Flasche gegeben ist und sich unterhalb des maximalen Querschnitts befindet, bewegbar sind, **dadurch gekennzeichnet, dass** die Lagerplatz-Aufnahmen (11) und die Einlagerungs-Aufnahme (41) derart ausgebildet sind, dass die Flaschen (2) in diesen liegend gesichert gegen ein Verrollen gehalten sind.

2. Kommissioniervorrichtung (1) zum Lagern von Flaschen (2) nach Anspruch 1, **dadurch gekennzeichnet, dass** die Zinken (32, 33) des Greifmittels (31) ortsfest an dem Greifmittel angeordnet sind, wobei der Abstand (DI) zwischen gegenüberliegenden inneren Außenflächen (34, 35) der Zinken (32, 33) größer als die äußere Aufnahmenbreite (AB) ist.

3. Kommissioniervorrichtung (1) zum Lagern von Flaschen (2) nach Anspruch 1 oder 2, **dadurch gekennzeichnet, dass** die Zinken (32, 33) zylinderförmig oder stabförmig ausgebildet sind, wobei bei stabförmiger Ausgestaltung die beiden Zinken um eine Längsachse drehbar sein können.

4. Kommissioniervorrichtung (1) zum Lagern von Flaschen (2) nach einem der Ansprüche 1 - 3, **dadurch gekennzeichnet, dass** zumindest ein Zinken (32, 33) bei seinem Ende einen Mitnehmer aufweist.

5. Kommissioniervorrichtung (1) zum Lagern von Flaschen (2) nach einem der Ansprüche 1 - 4, **dadurch gekennzeichnet, dass** der Einlagerungseinrichtung (40) eine Vermessungseinrichtung (80) zugeordnet ist, mit welcher zumindest der Durchmesser (DMA) der Flaschen (2) ermittelbar ist.

6. Verfahren zum Auslagern von Flaschen (2) aus einer Kommissioniervorrichtung (1), wobei
mit einer Steuereinrichtung (70) ein Lagerplatz (10) einer auszulagernden Flasche (2) ermittelt wird,
ein mit der Steuereinrichtung (70) gekoppeltes Bediengerät (20) innerhalb der Kommissioniervorrichtung zu dem ermittelten Lagerplatz verfahren wird,
die ermittelte Flasche mit einem Greifer (30) des Bediengeräts (20) von einer dem Lagerplatz zugeordneten Lagerplatz-Aufnahme (11) entnommen wird, wobei die Lagerplatz-Aufnahme (11) durch eine Mehrzahl von parallelen Lagerplatz-Streben gebildet wird, indem Zinken (32, 33) eines Greifmittels (31) des Greifers (30) parallel zu einer Lagerplatz-Aufnahme (11) einer auszulagernden Flasche (2) in Y-Richtung zumindest abschnittsweise in einen Raum, der durch den Querschnitt der auszulagernden Flasche gegeben ist und sich unterhalb des maximalen Querschnitts befindet, bewegt werden, und
anschließend die Zinken (32, 33) in Z-Richtung nach oben bewegt werden und ein Kraftschluss zwischen den Zinken (32, 33) und einer auszulagernden Flasche hergestellt wird, mittels welchem die auszulagernde Flasche von der durch eine Mehrzahl von parallelen Lagerplatz-Streben gebildeten Lagerplatz-Aufnahme, und die auszulagernde Flasche (2) mit dem Bediengerät (20) an eine Entladeeinrichtung (60) der Kommissioniervorrichtung (1) übergeben wird, die auszulagernde Flasche von dem Lagerplatz (10) bewegt wird, indem die Flasche nach Herstellen des Kraftschlusses über eine Bewegung in Z-Richtung von der durch eine Mehrzahl von parallelen Lagerplatz-Streben gebildeten Lagerplatz-Aufnahme (11) gehoben wird und anschließend die Zinken (32, 33) des Greifmittels (31) in Y-Richtung zurückbewegt werden, **dadurch gekennzeichnet, dass** die Lagerplatz-Aufnahme derart ausgebildet ist, dass die Flasche (2) in dieser liegend gesichert gegen ein Verrollen gehalten ist.

7. Verfahren zum Auslagern von Flaschen (2) aus einer Kommissioniervorrichtung (1) nach -Anspruch 6, **dadurch gekennzeichnet, dass** zumindest eine der Zinken (32, 33) bei einem Ende einen Mitnehmer (36, 37) aufweist und dass neben dem Herstellen eines Kraftschlusses ein Formschluss zwischen Mitnehmer (36, 37) und der auszulagernden Flasche hergestellt wird.

## Claims

1. A picking device (1) for storing bottles (2) having
a plurality of storage locations (10) for bottles (2),
an operating device (20) displaceable in front of the storage locations (10) horizontally in an X direction (X) and vertically in a Z direction (Z), coupled with a control device (70) and having a gripper (30),
at least one storing device (40) which can be used to move bottles (2) into the picking device (1) and from which the operating device (20) can remove the bottles (2),
at least one identification device (50) for identifying bottles (2),
an unloading device (60) to which the bottles (2) are transferred by the operating device for retrieval from the picking device (1),
wherein a plurality of the storage locations (10) has storage location receptacles (11) and the storing device (40) has at least one storing receptacle (41) for bottles (2), wherein
the gripper (30) has a gripping means (31) which is configured such that the bottles (2) are movable from the storing receptacles and storage location receptacles (11, 41) by being lifted by the gripping means (31),
wherein the storing receptacles (41) and/or the storage location receptacles (11) are formed by a plurality of parallel storing struts (43a, 43b) or parallel storage location struts (13a, 13b), and
wherein the gripping means (31) has two prongs (32, 33) of fork-shaped construction that are displaceable in a Y direction orthogonally to the X direction and in the Z direction and are configured such that they are movable in the Y direction, at least in sections, into a space defined by the cross-section of the bottle that is to be retrieved and situated below the maximum cross-section,
**characterized in that**
the storage location receptacles (11) and the storing receptacles (41) are configured such that the bottles (2) are held therein in a lying position in such a way that they are secured against rolling.

2. The picking device (1) for storing bottles (2) according to claim 1, **characterized in that** the prongs (32, 33) of the gripping means (31) are arranged in a stationary manner on the gripping means, wherein the distance (DI) between opposite inner surfaces (34, 35) of the prongs (32, 33) is greater than the outer receptacle width (AB).

3. The picking device (1) for storing bottles (2) according to claim 1 or 2, **characterized in that** the prongs (32, 33) are of cylinder-shaped or rod-shaped configuration, wherein the two prongs can be rotatable about a longitudinal axis when they are in the rod-shaped design.

4. The picking device (1) for storing bottles (2) according to any one of claims 1 - 3, **characterized in that** at least one prong (32, 33) has a carrier at its end.

5. The picking device (1) for storing bottles (2) according to any one of claims 1 - 4, **characterized in that** the storing device (40) is associated with a measuring device (80) which can be used to determine at least the diameter (DMA) of the bottles (2) .

6. A method for retrieving bottles (2) from a picking device (1), wherein
a control device (70) is used to determine a storage location (10) of a bottle (2) that is to be retrieved,
an operating device (20) coupled with the control device (70) is displaced, within the picking device, to the determined storage location,
the determined bottle is removed from a storage location receptacle (11) associated with the storage location using a gripper (30) of the operating device (20), wherein the storage location receptacle (11) is formed by a plurality of parallel storage location struts, by
moving the prongs (32, 33) of a gripping means (31) of the gripper (30) parallel to a storage location receptacle (11) of a bottle (2) that is to be retrieved in the Y direction, at least in sections, into a space defined by the cross-section of the bottle that is to be retrieved and situated below the maximum cross-section, and
subsequently moving the prongs (32, 33) upwards in the Z direction and producing a frictional connection between the prongs (32, 33) and a bottle that is to be retrieved, by means of which the bottle that is to be retrieved is moved away from the storage location receptacle, which is formed by a plurality of parallel storage location struts, and transferring the bottle (2) that is to be retrieved to an unloading device (60) of the picking device (1) using the operating device (20),
moving the bottle that is to be retrieved away from the storage location (10) by, after producing the frictional connection, lifting the bottle from the storage location receptacle (11), which is formed by a plurality of parallel storage location struts, via a movement in the Z direction and by subsequently moving the prongs (32, 33) of the gripping means (31) backwards in the Y direction,
**characterized in that**
the storage location receptacle is configured such that the bottle (2) is held therein in a lying position in such a way that it is secured against rolling.

7. The method for retrieving bottles (2) from a picking device (1) according to claim 6, **characterized in that** at least one of the prongs (32, 33) has a carrier (36, 37) at one end and **in that**, in addition to producing a frictional connection, a positive connection is produced between the carrier (36, 37) and the bottle that is to be retrieved.

## Revendications

1. Dispositif de préparation de commandes (1) pour le stockage de bouteilles (2) avec
une pluralité d'emplacements de stockage (10) pour les bouteilles (2),
un appareil de commande (20) pouvant être déplacé horizontalement dans une direction X (X) et verticalement dans une direction Z (Z) devant les emplacements de stockage (10), couplé à un dispositif de commande (70) et présentant un préhenseur (30),
au moins un dispositif de stockage (40), avec lequel des bouteilles (2) sont déplacées dans le dispositif de préparation de commandes (1) et duquel l'appareil de commande (20) peut prélever des bouteilles (2),
au moins un dispositif d'identification (50) pour identifier les bouteilles (2),
un dispositif de déchargement (60), auquel des bouteilles (2) sont transférées par l'appareil de commande pour être déchargées du dispositif de préparation de commandes (1),
dans lequel une pluralité des emplacements de stockage (10) présente des réceptions d'emplacement de stockage (11) et le dispositif de stockage (40) présente au moins une réception de stockage (41) pour des bouteilles (2), dans lequel le préhenseur (30) présente un moyen de préhension (31) qui est conçu de telle sorte que des bouteilles (2) peuvent être déplacées des réceptions de stockage et d'emplacement de stockage (11, 41) en soulevant les bouteilles (2) par le moyen de préhension (31),
les logements de stockage (41) et/ou les logements d'emplacement de stockage (11) étant formés par une pluralité de barres de stockage parallèles (43a, 43b) ou de barres d'emplacement de stockage parallèles (13a, 13b), et
le moyen de préhension (31) présentant deux dents (32, 33) réalisées en forme de fourche, qui peuvent être déplacées orthogonalement à la direction X dans une direction Y ainsi que dans la direction Z et qui sont réalisées de telle sorte qu'elles peuvent être déplacées dans la direction Y au moins par sections dans un espace qui est donné par la section transversale de la bouteille à déstocker et qui se trouve en dessous de la section transversale maximale,
**caractérisé en ce que** les logements d'emplacement de stockage (11) et le logement de stockage (41) sont conçus de telle sorte que les bouteilles (2) sont maintenues couchées dans ceux-ci de manière sécurisée contre un roulement.

2. Dispositif de préparation de commandes (1) pour stocker des bouteilles (2) selon la revendication 1, **caractérisé en ce que** les dents (32, 33) du moyen de préhension (31) sont disposées de manière fixe sur le moyen de préhension, la distance (DI) entre des surfaces extérieures intérieures opposées (34, 35) des dents (32, 33) étant supérieure à la largeur de réception extérieure (AB).

3. Dispositif de préparation de commandes (1) pour stocker des bouteilles (2) selon la revendication 1 ou 2, **caractérisé en ce que** les dents (32, 33) sont conçues en forme de cylindre ou de barre, les deux dents pouvant être tournées autour d'un axe longitudinal dans le cas d'une conception en forme de barre.

4. Dispositif de préparation de commandes (1) pour stocker des bouteilles (2) selon l'une quelconque des revendications 1 à 3, **caractérisé en ce qu'**au moins une dent (32, 33) comporte un entraîneur à son extrémité.

5. Dispositif de préparation de commandes (1) pour stocker des bouteilles (2) selon l'une des revendications 1 à 4, **caractérisé en ce qu'**un dispositif de mesure (80) est associé au dispositif de stockage (40), lequel permet de déterminer au moins le diamètre (DMA) des bouteilles (2).

6. Procédé de déstockage de bouteilles (2) d'un dispositif de préparation de commandes (1), dans lequel
un emplacement de stockage (10) d'une bouteille (2) à déstocker est déterminé à l'aide d'un dispositif de commande (70),
un appareil de commande (20) couplé au dispositif de commande (70) est déplacé à l'intérieur du dispositif de préparation de commandes vers l'emplacement de stockage déterminé,
la bouteille déterminée est prélevée avec un préhenseur (30) de l'appareil de commande (20) d'un logement d'emplacement (11) associé à l'emplacement de stockage, le logement d'emplacement (11) étant formé par une pluralité d'entretoises d'emplacement parallèles, par le fait que
des dents (32, 33) d'un moyen de préhension (31) de la pince (30) sont déplacées parallèlement à un logement d'emplacement de stockage (11) d'une bouteille (2) à déstocker dans la direction Y au moins par sections dans un espace qui est donné par la section transversale de la bouteille à déstocker et qui se trouve en dessous de la section transversale maximale, et
ensuite, les dents (32, 33) sont déplacées vers le haut dans la direction Z et une adhérence est établie entre les dents (32, 33) et une bouteille à déstocker, au moyen de laquelle la bouteille à déstocker est séparée du logement de stockage formé par une pluralité d'entretoises de stockage parallèles, et
la bouteille (2) à déstocker est transférée avec l'appareil de commande (20) à un dispositif de déchargement (60) du dispositif de préparation de commandes (1),
la bouteille à déstocker est déplacée de l'emplacement de stockage (10) en soulevant la bouteille, après l'établissement de l'adhérence, par un mouvement dans la direction Z du logement d'emplacement de stockage (11) formé par une pluralité d'entretoises d'emplacement de stockage parallèles et en ramenant ensuite les dents (32, 33) du moyen de préhension (31) dans la direction Y, **caractérisé en ce que** le logement d'emplacement de stockage est conçu de telle sorte que la bouteille (2) est maintenue couchée dans celui-ci de manière sécurisée contre un roulement.

7. Procédé de déstockage de bouteilles (2) d'un dispositif de préparation de commandes (1) selon la revendication 6, **caractérisé en ce qu'**au moins l'une des dents (32, 33) présente à une extrémité un entraîneur (36, 37) et **en ce qu'**en plus de la réalisation d'une liaison par adhérence, une liaison par la forme est réalisée entre l'entraîneur (36, 37) et la bouteille à déstocker.
